## Europäisches Patentamt

## European Patent Office

## Office européen des brevets

(11) Publication number: **0 236 617**
**B1**

(12) **EUROPEAN PATENT SPECIFICATION**

(45) Date of publication of patent specification: **05.09.90**

(21) Application number: **86306960.5**

(22) Date of filing: **10.09.86**

(51) Int. Cl.[5]: **C 04 B 12/02, C 04 B 28/34, C 04 B 35/00**

(54) Phosphate solutions and their use as binders.

(30) Priority: **10.02.86 US 828216**

(43) Date of publication of application:
**16.09.87 Bulletin 87/38**

(45) Publication of the grant of the patent:
**05.09.90 Bulletin 90/36**

(84) Designated Contracting States:
**AT BE CH DE FR IT LI LU NL SE**

(56) References cited:
**US-A-4 419 133**

(73) Proprietor: **ALBRIGHT & WILSON AMERICAS INC.**
**P.O. Box 26229**
**Richmond, Virginia 23260-6229 (US)**

(72) Inventor: **Strong, Jerry Glenn**
**2041 Castlebridge Road**
**Midlothian Virginia 23113 (US)**
Inventor: **Hamlin, Michael Eugene**
**2110 Running Brook Lane**
**Midlothian Virginia 23113 (US)**
Inventor: **Moynihan III, James Joseph**
**2735 Swanhurst Drive**
**Midlothian Virginia 23113 (US)**

(74) Representative: **Wilson, Michael John et al**
**c/o Albright & Wilson Limited 1 Knightsbridge Green**
**London SW1X 7QD (GB)**

Courier Press, Leamington Spa, England.

**Description**

This invention concerns aqueous phosphate solutions and their uses.

Aqueous Mono Aluminum Phosphate solutions have been described for use as binders, cements, or coatings in a variety of applications where thermally stable or quick setting properties are desired. Thus mono aluminum phosphate solutions have been described as a binder in refractory mortars/plastics, and moulded articles and most particularly, high alumina refractories, a coating for silicon steel to provide interlaminar electrical resistance for transformer cores (U.S. Patent No. 2,745,203), a component of a matrix for coating and binding refractory fibers (PCT application No. WO85/01676), a reactive component for bonded aggregate structures (U.S. Patent No. 4,419,133), a reactive component of an inorganic resin system utilized as a cement in a variety of applications (U.S. Patent No. 4,141,744 and US 4504555), or a reactive component of a foamed ceramic (U.S. Patent No. 3,148,996). Aqueous Mono magnesium phosphate solutions have also been described for use as binders in refractory applications and for coating silicon steel. Both the mono aluminum phosphate solutions and the mono magnesium phosphate solutions as sold contain free phosphoric acid.

Many of the compositions comprising mono aluminum phosphate solutions are prepared and/or applied out-of-doors, and may require shipping, storage, and/or blending of the mono aluminum phosphate solutions out-of-doors. Mono aluminum phosphate solutions have relatively high crystallization and freezing points, e.g., a 50% solution has crystallization point of $+5°F$ ($-15°C$) and a freezing point of $-10°F$ ($-23°C$) resulting in difficulty in shipping, storage, blending, or application of aqueous mono aluminum phosphate containing compositions out-of-doors in cold climates. In particular, heated storage facilities, and heated transfer lines are required if temperatures are anticipated below $10°F$ ($-23°C$).

We have discovered aqueous phosphate solutions comprising mono aluminum phosphate having depressed crystallization and freezing points, thereby reducing the difficulties involved in the shipping, storage, blending, and application of aqueous mono aluminum phosphate containing compositions in cold climates.

The present invention provides an aqueous phosphate solution, comprising component (i) mono aluminum tris(dihydrogen phosphate) and component (ii) a salt of a metal selected from the group consisting of alkali metals, alkaline earth metals and aluminum and mixtures thereof and an acid at least as strong as phosphoric acid, with the proviso that if the said metal consists of aluminum, then said acid is stronger than phosphoric acid, and component (iii) phosphoric acid, the total weight amount of the components (i), (ii) and (iii) being 30—55%, the molar percentage of said metal in component (ii) to the total of said metal in component (ii) and aluminum in component (i) being 1—65% and the molar percentage of phosphoric acid (iii) (expressed as $H_3PO_4$) to total of said metal in component (ii) and aluminum in component (i) being 0.5—100%.

In the solutions of the invention the metal in component (ii) is an alkali metal e.g. lithium, sodium or potassium, or an alkaline earth metal e.g. calcium, strontium, barium or magnesium, or aluminum, or a mixture thereof. The metal salt of component (ii) is derived from an acid at least as strong as phosphoric acid (ie. with a pKa at most that of the pKa for the first dissociation of phosphoric acid) e.g. phosphoric acid itself, or sulfuric, nitric or hydrochloric acids, with the proviso that when the metal in component (ii) is aluminum, the acid is stronger than phosphoric acid e.g. sulfuric, nitric or hydrochloric acids or a mixture thereof. When the metal is an alkali metal or alkaline earth metal, the salt is preferably derived from phosphoric acid. Most preferably the salt in component (ii) is magnesium or calcium bis(dihydrogen phosphate) especially the magnesium salt. Examples of alkali metal salts are sodium and potassium dihydrogen phosphates. Other salts for component (ii) include magnesium sulfate and component sulfate. In a special embodiment of the invention the salt in component (ii) is a mixture of magnesium bis(dihydrogen phosphate) and aluminum sulfate and the solution of the invention is one wherein components (i) and (ii) contain aluminum and magnesium ions and dihydrogen phosphate and sulfate ions.

The molar percentage of metal in component (ii) to the total of metal in component (ii) and aluminum in component (i) is 1—65%, e.g. 1—60% such as 1—45%, e.g. 2—30%. The percentage is most preferably 6—20% such as 10—20%, e.g. about 14%, giving a solution having a combination of significantly reduced crystallization point coupled with properties as a binder substantially similar to those of the aluminum phosphate solution without adding component (ii). Solutions of the invention can advantageously have a crystallization point as herein after defined of $-26.1°C$ to $-34.4°C$ ($-15°F$ to $-30°F$). For solutions of highly reduced crystallization point for very low temperature use, the molar percentage of metal in component (ii) may be 20—60%, e.g. 20—50%, especially with alkaline earth metals particularly magnesium.

The aqueous solution of the invention usually contains 40—55%, by weight components (i) and (ii) in total especially 45—55% by weight such as about 50 weight %; solutions of 45—53% total concentrations tend to have higher stability compared to ones of higher concentration. A preferred solution contains 40—52%, e.g. 40—50%, by weight of component (i) and 1—15% e.g. 5—15% by weight of component (ii), especially ones with 40—52% of component (i) and conversely 10—1% of component (ii), e.g. mono magnesium dihydrogen phosphate giving a total weight of 47—53% by weight of components (i) and (ii). Thus solutions may contain 1—9%, e.g. 3—7% such as about 5% by weight of component (ii) and 41—49%, e.g. 43—47% such as 45% by weight of component (i). In preferred solutions there is 40—52 wt % of the mono aluminum phosphate, 1—15% wt % of magnesium bis (dihydrogen phosphate) with the molar percentage of magnesium to total of magnesium and aluminum being 5—15%.

Component (iii) in the solutions of the invention is phosphoric acid which is present in a molar percentage based on the total metal in component (ii) and component in component (i) of 0.5—100%, preferably 5—60%, e.g. 5—50%, and especially 10—50% such as 10—25%, e.g. about 20%. The phosphoric acid (iii) (herein after called "free phosphoric acid") is that in excess of the acid which fully reacts with the metals in components (i) and (ii) to form metal (dihydrogen phosphates); no distinction is made between acid present free in the solution and that (if any) which may be complexed with the metal dihydrogen phosphates. The molar percentage of component (iii) phosphoric acid to the metal in component (ii) is usually 0.5—200%.

The above solutions of this invention which comprise mixtures of mono aluminum tris(dihydrogen phosphate), an alkali metal or alkaline earth metal dihydrogen phosphate and phosphoric acid contain an amount of phosphates (e.g. expressed as $P_2O_5$) which is more than that stoichiometrically needed to form the mono metal salts. Thus the $P_2O_5$ content of the solution is related to the content of metal and aluminum so that the number of equivalents of $P_2O_5$ is greater than the total number of Equivalents of Al and Number of equivalents of alkali or alkaline earth metal, e.g. as in the formula:

$$\% \ P_2O_5 \ > \ 4.2A \ + \ \frac{71B}{M_B} \ + \ \frac{142C}{M_C}$$

where % $P_2O_5$ is the weight content of phosphate in the solution, A, B and C are the % by weight of $Al_2O_3$, alkali metal oxide and alkaline earth metal oxide respectively and $M_B$ and $M_C$ are the molecular weights of the alkali metal oxide and alkaline earth metal oxide respectively. Preferably the $P_2O_5$ weight content of the solution fulfils the following function.

$$4.2A1 \ + \ \frac{71B}{M_B} \ + \ \frac{142C}{M_C} \ < \ P_2O_5 \ < 4.2A \ + \ \frac{106B}{M_B} \ + \ \frac{213C}{M_C}$$

The solutions especially contain 1—5% by weight e.g. 2—3% weight excess of $P_2O_5$ over that stoichiometrically required for the amount of aluminum and metals present in the solution.

Because of this content of extra phosphoric acid these solutions are differentiated from earlier described solutions of sodium (or potassium) aluminum phosphate such as those used as food additives of formula $NaAl_3H_{14}(PO_4)_8 4H_2O$ (see eg. USP 3311448 and USP 4375456) or the corresponding potassium salts crystals of which have also been isolated from wet phosphoric acid sludge solids (see J. Agr. Food Chem. 1966, Vol 14 No 11 pp 27—33). A similar differentiation is also clear from the mixtures of the above sodium aluminum phosphates with calcium dihydrogen phosphates described for use in Baking (see Kirk Orhmer Encyclopaedia of Chemical Technology Vol 3 Second Ed. 1964 Page 58 and USP 4375456). The solutions of the inventions are also differentiated from the hot concentrated solutions of USP 2550490 and BP 1586583 from which the food additive sodium aluminum phosphates may be crystallized. Such solutions of the invention are different from the reaction products of magnesium oxide with monoaluminum phosphate binders which give insoluble cements and do not contain the excess of phosphoric acid (see J. E. Cassidy, Ceramic Bulletin Vol 56, No. 7 pp 640—43 and J. Ando et al Yogyo-Kyokai Shi Vol 82, No. 12, 1974 pp 644—9, Chem. Abs. Vol. 82, 1975 pp 102271z).

The amounts of component (i) mono aluminum tris (dihydrogen phosphate), component (ii) mino alkali metal or alkaline earth metal dihydrogen phosphate and water in the solutions may also be expressed in terms of their relative molar percentages, i.e. excluding the free phosphoric acid. In these terms the solutions may contain 2—7 mole % component (i), 0.1—4.5 mole %, e.g. 0.1—4 mole % component (ii) and correspondingly 97—93 mole % water. Preferred mole % of component (i) are 3—7%, e.g. 4—6 mole %. Preferred mole % of component (ii) especially of alkaline earth metal dihydrogen phosphates such as mono magnesium phosphate are 0.1—2%, e.g. 0.2—1.5%. Preferred mole % of water are 96.5—93%, e.g. 95—93.9%. The preferred molar percentages of components (i), (ii) and water are especially preferred in combination with molar percentages of free phosphoric acid of 0.5—2% (expressed as $H_3PO_4$ on the basis of moles of components (i), (ii) and water) or 10—50 mole % based on the total metal components (i) and (ii). Addition of more phosphoric acid at constant mole % components (i) and (ii) decreases the crystallization point further.

The solutions of the invention may be made by mixing the three components (i), (ii) and (iii), usually by adding metal salt component (ii) to component (i) while component (iii) may be present with either component (i) or (ii) or both, or may be added subsequently. Thus an aqueous solution of monoaluminum phosphate and phosphoric acid may be mixed with an aqueous solution of mono magnesium phosphate and phosphoric acid, both solutions being sold by Albright & Wilson Inc. of Richmond, Virginia. When the salt component (ii) is derived solely from phosphoric acid then it may be convenient to prepare the solution by adding basic compounds of aluminum and metal of component (ii) to an appropriate excess of phosphoric acid. Adding the basic compounds to the acid rather than the reverse increases the stability of the solutions of dihydrogen phosphates obtained. Examples of such basic compounds are alumina,

EP 0 236 617 B1

hydrated alumina, aluminum hydroxide, and oxides, hydroxides, carbonates and bicarbonates of alkali metals and alkaline earth metals e.g. magnesium oxide or hydroxide. The corresponding metals may be used instead of the basic compounds. Thus magnesium oxide and alumina may be dissolved in an appropriate excess of phosphoric acid either consecutively or concurrently.

In the case of solutions in which component (ii) is a metal salt of an acid other than phosphoric acid, component (ii) as such may be added to a mixture of component (i) and (iii), or the basic compounds of aluminum and the metal of component (ii) may be added to a mixture of phosphoric acid and the other acid forming the anion in the metal salt, the amount of the other acid being usually equivalent to the metal in component (ii). Thus the basic compounds may be added consecutively or concurrently to a mixture of phosphoric acid and the other acid e.g. sulfuric or nitric acid or a mixture of both; the mixture may be obtained by solvent purification of wet process phosphoric acid e.g. when the acidic solution to be treated with the base is to contain a molar sulfuric to total phosphate percentage of 0.0001—1%. Advantageously a source of such a mixture of acid is the rinse and used liquors from acidic aluminum polishing baths, in which aluminum surfaces are treated with treating mixtures of phosphoric, sulphuric acid and nitric acid to give the surface a bright finish. Such treating mixtures are sold by Albright & Wilson Inc. under the Trade Mark "PHOSBRITE". The rinse and used liquors contain phosphoric acid, sulphuric acid and aluminum, together optionally with small amounts of nitric acid and/or copper. Such liquors (or the solvent purified phosphoric acid) may be mixed with extra phosphoric acid e.g. "thermal" acid if needed to produce an acid solution of the requisite strength for producing the solutions of the invention. Such liquors may for example contain by weight 20—40% phosphoric acid, 2—10% sulfuric acid and 0.1—5% aluminum. Thus overall in these solutions of the invention the molar percentage of sulfate ion to phosphate in components (i), (ii) and (iii) is usually 0.0001—20%, e.g. 5—15%.

Thus in a special embodiment the solution of the invention contains aluminum and magnesium and dihydrogen phosphate and sulfate ions and phosphoric acid, with the proportions as specified above, the molar percentage of sulfate to total phosphate (i.e. dihydrogen phosphate and phosphoric acid) being about 1—29% e.g. 5—15% such as about 10%. The crystallization point of such solutions with the added sulfate is unexpectedly low, and lower than that of the corresponding solutions with sulfate replaced by dihydrogen phosphate.

Analyses of the solutions of the inventions may be for (a) the specific metals Al and e.g. Mg (b) total phosphate e.g. by color or gravimetric methods and (c) free acidity. The amount of free acidity can be found by determination of total acidity (including the acid values of the dihydrogen phosphate salts) and subtraction therefrom of total phosphate. The amount of free phosphoric also can be found by difference from the total phosphate content and that combined with the specified metals. Solutions of mono aluminum dihydrogen phosphate in the absence of excess phosphoric acid usually have a pH of 4—4.5, while the pH of solutions of the invention is usually 1—3.5, especially 2—3 for solutions of the invention diluted to 1% total solids content.

The solutions of the invention may be used as binders for refractory mortars, e.g. with aluminum as aggregate or for quick setting cements with a divalent or trivalent metal oxide e.g. magnesium oxide and/or alumina as curing agent and a wide variety of aggregates varying from ones of low density e.g. of 64—320 kg/m$^3$ (4—20 pounds per cubic foot) or 80—400 kg/m$^3$ (0.08—0.4 g/cc) such as perlite or vermiculite or mixtures thereof for use in insulation or of intermediate density e.g. 320—960 kg/m$^3$ (20—60 pounds per cubic foot) or 400—1000 kg/m$^3$ (0.4—1 g/cc) to ones of high density e.g. 800—2400 kg/m$^3$ (50—150 pounds per cubic foot) or 1000—2500 kg/m$^3$ (1—2.5 g/cc) such as sand and gravel, for uses where high compressive strengths are needed e.g. for grouts for use in cracks in roadways. In these uses the curing agent may be mixed with the solution in the presence of aggregate and formed into the desired shape e.g. trowelled into cracks or applied to surfaces. The present invention also provides a two-component pack comprising in the first pack a solution of the invention and in the second pack separated therefrom a mixture of a metal oxide curing agent and an aggregate, the first and second packs being such that they form a set cement on intimate mixing. There is also provided a method of producing a set cement in which an aluminum hydrogen phosphate solution of the invention reacts with a metal oxide curing agent in the presence of an aggregate, e.g. perlite. The solutions of the invention comprising less than 30% molar mono magnesium or calcium dihydrogen phosphate as component (ii) usually give cured products with substantially similar thermal resistance to those without the added component (ii), as do those with less than 20% of mono alkali metal phosphates as component (i). Those solutions with more than 30% molar mono alkaline earth metal phosphate as component (ii) usually give cured products of higher flexibility but lower strength than those without added component (ii).

In this specification the term "crystallization point" of the solution is used to mean the temperature at which crystals are first observed in the solution which is stirred in a vessel which is immersed in an acetone/carbon dioxide bath at about −50°F (about −46°C). The term "freezing point" of the solution in this specification means the temperature at which the above solution all crystallizes. The terms are therefore different from those obtained from freezing point curves obtained isothermally.

The invention is illustrated in the following Examples. All parts and percentages in this specification are by weight. The mono aluminum dihydrogen phosphate solution used in the Examples was a commercial product sold by Albright & Wilson Inc. of Richmond, Virginia, having the following properties.

Analysis Al$_2$O$_3$ (specification range 7.8—8.2 typically 7.8%). P$_2$O$_5$ (specification range 33.4—34.0%, typically

4

33.7%. Specific gravity 80°F/60°F, (27°C/16°C) (specification range 1.47—1.50 typically 1.485) and free phosphoric acid (pH 1). Crystallization point 5°F (−15°C), Freezing Point −10°F (−23°C) and boiling point 220°F (104°C). The crystallization and freezing points were determined as specified above.

Example 1—8 and Comparative Example A

Magnesium oxide, phosphoric acid, and water were added to the 50 percent monoaluminum phosphate solution to obtain solutions with from 1 to 25 percent monomagnesium phosphate, respectively. Each solution contained a total of 50 percent solids and an excess of phosphoric acid in amount based on the weight of the solution of 2.5% (expressed as $P_2O_5$ or 3.5% expressed as $H_3PO_4$).

Each solution was cooled in the carbon dioxide-acetone bath and the temperature at which crystallization first occurred was recorded in degree Fahrenheit. The molar proportions of the above ingredients can be expressed in terms of relative molar % mono aluminum phosphate (MAP), mono magnesium phosphate (MMP) and water (i.e. excluding the free phosphoric acid). Results were as follows:

| Ex | Mono-aluminum Phosphate (wt%) | Mono-magnesium Phosphate wt% | Molar % on total Mg and Al | Crystallization Point °F | (°C) | Molar Proportions %MAP | %MMP | %H₂O |
|---|---|---|---|---|---|---|---|---|
| A | 50 | 0 | 0 | 4 | −16 | 5.8 | Nil | 94.2 |
| 1 | 49 | 1 | 2.9 | −11 | −24 | 5.6 | 0.2 | 94.2 |
| 2 | 47 | 3 | 8.5 | −16 | −27 | 5.4 | 0.5 | 94.1 |
| 3 | 45 | 5 | 13.9 | −19 | −28 | 5.2 | 0.8 | 94.0 |
| 4 | 43 | 7 | 19.2 | −22 | −30 | 4.9 | 1.2 | 93.9 |
| 5 | 40 | 10 | 26.7 | −27 | −33 | 4.6 | 1.7 | 93.7 |
| 6 | 35 | 15 | 38.5 | −27 | −33 | 4.0 | 2.5 | 93.5 |
| 7 | 30 | 20 | 49.4 | X<−50° | <−46 | 3.4 | 3.3 | 93.3 |
| 8 | 25 | 25 | 59.3 | X<−50° | <−46 | 2.8 | 4.1 | 93.1 |

X denotes no crystals produced at all.

Examples 9—11

Phosphoric acid water and (i) calcium oxide, (Ex. 9) (ii) disodium hydrogen phosphate Ex. 10, or (iii) mono potassium dihydrogen phosphate the (Ex. 11) were added to the 50 percent monoaluminum phosphate solution to produce solutions which contained 45 percent monoaluminum phosphate, 5 percent of the respective alkali metal or alkaline earth metal dihydrogen phosphate, and an excess of phosphoric acid in amount (based on the weight of solution) of 2.5% expressed as $P_2O_5$ or 3.5% expressed as $H_3PO_4$.

Each solution was cooled in the carbon dioxide-acetone bath and the temperatures at which crystallization first occurred was recorded.

Results were as follows:

| Ex | Extra metal Phosphate Nature | Wt% | Molar % (based on total metals) | Crystallizing Point °F | (°C) |
|---|---|---|---|---|---|
| 9 | Ca | 5 | 13.2 | −21 | −30 |
| 10 | K | 5 | 20.7 | − 8 | −22 |
| 11 | Na | 5 | 22.8 | −11 | −24 |

## Example 12

A mixture was prepared of 80 grams of the 50 percent monoaluminum phosphate solution and 20 grams of a 37 percent monomagnesium phosphate solution containing MgO: 6.6—6.9% and $P_2O_5$: 32.3—34.3% [corresponding to an excess of phosphoric acid of 10% weight (as $P_2O_5$)] and specific gravity 80°F/60°F, (27/16°C) of 1.475—1.500.

The mixture thus contained 40 wt% monoaluminum phosphate and 7.4 wt% monomagnesium phosphate (15.6% weight based on total of metal phosphates or 21.2% molar based on total of Mg and Al) and extra phosphoric acid (21.7% molar based on the total of Mg and Al). The mixture, which was a solution at room temperature was cooled in the carbon dioxide acetone bath and the temperature at which crystallization first occurred was recorded. The results were as follows:

Crystallization Point: −14°F (−25.5°C)
Freezing Point:     −26°F (−32°C)

The temperatures at which the original component solutions first crystallized and then completely froze were measured to be:

| | Crystallization Point | | Freezing Point | |
|---|---|---|---|---|
| | °F | (°C) | °F | (°C) |
| 50% monoaluminum phosphate solution | -2 | -19 | -13 | -25 |
| 37% monomagnesium phosphate solution | <-50 | <-46 | <-50 | <-46 |

## Example 13

Magnesium oxide of 99.99% purity and phosphoric acid of 85.2% $H_3PO_4$ concentration and specific gravity 1.686—1.692 were added to the 50 percent monoaluminum phosphate solution to obtain a solution containing monoaluminum phosphate 45%, monomagnesium phosphate 5% and excess phosphoric acid in amount of 2% (expressed as $P_2O_5$ or 2.8% expressed as $H_3PO_4$).

The solution contained in molar percentages (based on the total of Mg and Al) 13.9% magnesium dihydrogen phosphate and 17% excess phosphoric acid. The solution was cooled in the carbon dioxide-acetone bath and the temperature at which crystallization first occurred was recorded.

Results were as follows: Crystallization point −18°F (−28°C), Freezing point −29°F (−34°C).

## Example 14

A refractory composition was made mixing 37.4 parts of calcined alumina, 15.9 parts of magnesium oxide and 46.6 parts of the solution of Example 3. The composition set rapidly at room temperature to give a solid cured refractory product.

## Example 15, 16 and Comparative Example

In a similar manner to that of Ex. 1, solutions were prepared of mono aluminum tris (dihydrogen phosphate MAP) and free phosphoric acid and variable amounts of magnesium bis dihydrogen phosphate (MMP). The crystallization point (CP) of these solutions (°F) was determined. The results were as follows:

| Ex | Moles MAP | Wt % MAP | Moles MMP | Wt % MMP | Total Moles Salts | Wt % Total Solids | Moles $H_3PO_4$ | % Free $H_3PO_4$ | CP °F (°C) |
|---|---|---|---|---|---|---|---|---|---|
| Comp | 0.1644 | 52.3 | 0 | 0 | 0.1644 | 53.3 | 0.0352 | 3.4 | -26 (-32.2) |
| 15 | 0.1415 | 45.0 | 0.0229 | 5.0 | 0.1644 | 50.0 | 0.0352 | 3.4 | -19 (-28.3) |
| 16 | 0.1185 | 37.7 | 0.0459 | 10.0 | 0.1644 | 47.7 | 0.0352 | 3.4 | -11 (-23.9) |

6

In terms of the molar percentages of MAP, MMP and water based on the total of MAP, MMP and water and excluding the phosphoric acid content, the above results can also be expressed as follows:

| Ex | Moles % MAP | Moles % MMP | Moles % Water |
|----|-------------|-------------|---------------|
| Comp | 6.3 | 0 | 93.7 |
| 15 | 5.2 | 0.8 | 94.0 |
| 16 | 4.1 | 1.6 | 94.3 |

Examples 17—20

In a similar manner to that of Ex. 1, aqueous solutions were prepared containing MAP, MMP and variable percentages of phosphoric acid. The crystallization point CP of the solutions in °F was determined. The results were as follows.

| Ex | Moles MAP | Wt % MAP | Moles MMP | Wt % MMP | Total Moles Salts | Wt % Total Solids | Moles $H_3PO_4$ | % Free $H_3PO_4$ | CP °F (°C) |
|----|-----------|----------|-----------|----------|-------------------|-------------------|-----------------|------------------|------------|
| 17 | 0.1415 | 45.0 | 0.0229 | 5.0 | 0.1644 | 50.0 | 0.0164 | 1.6 | -6 (-21.1) |
| 18 | 0.1415 | 45.0 | 0.0229 | 5.0 | 0.1644 | 50.0 | 0.0352 | 3.4 | -19 (-28.3) |
| 19 | 0.1415 | 45.0 | 0.0229 | 5.0 | 0.1644 | 50.0 | 0.0493 | 4.8 | -32 (-35.5) |
| 20 | 0.1415 | 45.0 | 0.0229 | 5.0 | 0.1644 | 50.0 | 0.0822 | 8.06 | -40 (-40) |

In terms of the relative moles % of MAP, MMP and water (excluding phosphoric acid), the results may be expressed as follows:

| Ex | Molar % MAP | Molar % MMP | Molar % Water |
|----|-------------|-------------|---------------|
| 17 | 5.0 | 0.8 | 94.2 |
| 18 | 5.2 | 0.8 | 94.0 |
| 19 | 5.3 | 0.9 | 93.8 |
| 20 | 5.7 | 0.9 | 93.4 |

Examples 21—25

A solution was prepared containing 45 wt % MAP, 5% wt MMP and free phosphoric acid 3.4% and its crystallization point was determined. The solution was progressively diluted with water to concentration as listed below and the crystallization points determined. The results were as follows, including the relative molar % MAP, MMP and water (excluding the free phosphoric acid).

| Ex | Wt % Total MAP + MMP | Molar % MAP | Molar % MMP | Molar % $H_2O$ | % $H_3PO_4$ | Crystal Pt °F (°C) |
|----|----------------------|-------------|-------------|----------------|-------------|--------------------|
| 21 | 30 | 2.3 | 0.4 | 97.3 | 1.4 | 24 ( -4.5) |
| 22 | 35 | 2.9 | 0.5 | 96.6 | 1.7 | 18 ( -7.8) |
| 23 | 40 | 3.7 | 0.6 | 95.7 | 2.2 | 10 (-12.2) |
| 24 | 45 | 4.7 | 0.8 | 94.5 | 2.8 | 1 (-17.2) |
| 25 | 50 | 5.7 | 0.9 | 93.4 | 3.7 | -21 (-29.4) |

Example 26
An aqueous feedstock acid solution of phosphoric acid, sulfuric acid and aluminum obtained as wash and rinse liquor from an aluminum bright-polishing process contained by weight

28.5% $H_3PO_4$, 6.5% $H_2SO_4$, 0.8% Al (as $Al_2O_3$)

0.4% nitric acid, 0.04% benzotriazole, 244 ppm copper and 326 ppm nitrogen (as ammonium salt).

To a mixture of this feedstock acid (51.7 parts) and 85% thermal phosphoric acid (37.5 parts) was added with stirring 0.92 parts MgO and then to the hot solution obtained was added with stirring 9.86 parts hydrated alumina ($Al_2O_3.3H_2O$) to give a solution which contains aluminum and magnesium ions and hydrogen phosphate and sulfate ions in weight amounts of 7.4% Al (expressed as $Al_2O_3$), 0.95% Mg (expressed as MgO), 33.6% phosphate (expressed as $P_2O_5$) and 3.6% sulfate (expressed as $H_2SO_4$), together with the small amounts of nitrate, ammonia, copper and benzotriazole. The solution had a total concentration of 53.0 wt%, contained a molar % of Mg to total of Mg and Al of 13.8%, a molar % excess of $H_3PO_4$ to total of Mg and Al of 46% and a molar % of sulfate to total phosphate of 7.8%. The solution also contained in relative molar terms monoaluminum dihydrogen phosphate 5.03%, monomagnesium acid sulfate 0.64%, monomagnesium dihydrogen phosphate 0.17% and water 94.15% excluding the free phosphoric acid.

The crystallization point of the above solution was measured as described in Ex. 1 and found to be <−40°F (−40°C) (no crystals were observed).

In a comparative experiment, in which the magnesia was replaced by a corresponding weight % of alumina trihydrate to give a final solution containing 7.8% $Al_2O_3$ instead of 7.4% $Al_2O_3$ and 0.95% MgO, the crystallization point of the final solution was found to be −20°F )−28.9°C).

**Claims for the Contracting States: BE CH DE FR IT LI LU NL SE**

1. An aqueous aluminum phosphate solution, comprising component (i) mono aluminum tris-(dihydrogen phosphate) characterized in that it comprises component (ii) a salt of a metal, which is an alkali metal, alkaline earth metal or aluminum or mixture thereof and an acid at least as strong as phosphoric acid, with the proviso that if the said metal consists of aluminum, then said acid is stronger than phosphoric acid, and component (iii) phosphoric acid, the molar percentage of (iii) phosphoric acid (expressed as phosphoric acid) to total of said metal in component (ii) and aluminum in component (i) being 0.5—100%, and either the total weight amount of the components (i), (ii) and (iii) is 30—55% of said solution and the molar percentage of said metal in component (ii) to the total of said metal in component (ii) and aluminum in component (i) is 1—65%, or the relative molar percentages of component (i), component (ii) and water (excluding the phosphoric acid) are 2—7 mole % component (i), 0.1—4.5 mole % component (ii) and corresponding 97—33 mole % water.

2. A solution according to claim 1, characterized in that it contains a total of 45—55 weight % of components (i), (ii) and (iii).

3. A solution according to claim 1 or 2 characterized in that it contains 40—52 weight % component (i) and 1—10 weight % of component (ii).

4. A solution according to any one of claims 1—3 characterized in that the molar percentage of metal in component (ii) to the total of metal in components (i) and (ii) is 2—30%.

5. A solution according to claim 4 characterized in that said molar percentage is 10—20%.

6. A solution according to any one of claims 1—3 characterized in that the molar percentage of metal in component (ii) to total of metal in components (i) and (ii) is 20—50%.

7. A solution according to any one of the preceding claims characterized in that said metal in component (ii) is an alkaline earth metal or aluminum or a mixture thereof.

8. A solution according to claim 7, characterized in that said metal in component (ii) is magnesium or calcium.

9. A solution according to any one of claims 1—6 and 8 characterized in that component (ii) is a dihydrogen phosphate salt of a metal other than aluminum.

10. A solution according to claim 2 characterized in that it comprises 40—52 weight % of said mono aluminum phosphate, and 1—15 weight % of magnesium bis(dihydrogen phosphate), the molar percentage of magnesium to total of magnesium and aluminum being 10—20%.

11. A solution according to any one of the preceding claims characterized in that the molar percentage of component (iii) phosphoric acid to total of said metal in component (ii) and aluminum in component (i) is 5—50%.

12. A solution according to claim 11 characterized in that said molar percentage is 10—25%.

13. A solution according to any one of claims 1—10 characterized in that the molar percentage of component (iii) phosphoric acid to said metal in component (ii) is 0.5—200%.

14. A solution according to claim 7 characterized in that component (ii) contains aluminum sulfate.

15. A solution according to claim 7 characterized in that components (i) and (ii) contain aluminum and magnesium ions and dihydrogen phosphate and sulfate ions.

16. A solution according to claim 14 or 15 characterized in that the molar percentage of sulfate ion to phosphate in components (i), (ii) and (iii) is 0.0001—20%.

17. A solution according to claim 16 characterized in that the molar percentage of sulfate ion to phosphate is 5—15%.

18. A solution according to any one of the preceding claims characterized in that its crystallization point is −26°C to −34.5°C.

19. A solution according to claim 1 characterized in that the relative molar percentages of components (i), and (ii) and water (excluding phosphoric acid) are 3—7 moles % component (i), 0.2—1.5 moles % component (ii) and 95—93.9 moles % water.

20. A solution according to claim 19 characterized in that component (ii) is mono magnesium bis (dihydrogen phosphate).

21. A two component pack comprising in a first pack an aluminum hydrogen phosphate solution and in a second pack separated therefrom a mixture of a metal oxide curing agent and an aggregate, the first and second packs being such that they form a set cement on intimate mixing, characterized in that the aluminum hydrogen phosphate solution is a solution according to any one of the preceding claims.

22. A method of producing a set cement, in which an aluminum hydrogen phosphate solution reacts with a metal oxide curing agent, in the presence of an aggregate, characterized in that said solution is according to any one of claims 1—20.

23. A method according to claim 22 characterized in that the aggregate comprises perlite.

24. A set cement produced by the method of claim 22 or 23 or obtained by mixing the two component pack of claim 21.

**Claims for the Contracting State: AT**

1. A method of depressing the crystallization and freezing point of an aqueous aluminum phosphate solution comprising component (i) mono aluminum tris(dihydrogen phosphate), and characterized by the presence in the solution of component (ii) a salt of a metal, which is an alkali metal, alkaline earth metal or aluminum or mixture thereof and an acid at least as strong as phosphoric acid, with the proviso that if the said metal consists of aluminum, then said acid is stronger than phosphoric acid, and component (iii) phosphoric acid, the molar percentage of (iii) phosphoric acid (expressed as phosphoric acid) to total of said metal in component (ii) and aluminum in component (i) being 0.5—100%, and either the total weight amount of the components (i), (ii) and (iii) is 30—55% of the total solution and the molar percentage of said metal in component (ii) to the total of said metal in component (ii) and aluminum in component (i) is 1—65%, or the relative molar percentages of component (i), component (ii) and water (excluding the phosphoric acid) are 2—7 mole % component (i), 0.1—4.5 mole % component (ii) and corresponding 97—33 mole % water.

2. A method according to claim 1, characterized in that the solution contains a total of 45—55 weight % of components (i), (ii) and (iii).

3. A method according to claim 1 or 2 characterized in that the solution contains 40—52 weight % component (i) and 1—10 weight % of component (ii).

4. A method according to any one of claims 1—3 characterized in that the molar percentage of metal in component (ii) to the total of metal in components (i) and (ii) is 2—30%.

5. A method according to claim 4 characterized in that said molar percentage is 10—20%.

6. A method according to any one of claims 1—3 characterized in that the molar percentage of metal in component (ii) to total of metal in components (i) and (ii) is 20—50%.

7. A method according to any one of the preceding claims characterized in that said metal in component (ii) is an alkaline earth metal or aluminum or a mixture thereof.

8. A method according to claim 7, characterized in that said metal in component (ii) is magnesium or calcium.

9. A method according to any one of claims 1—6 and 8 characterized in that component (ii) is a dihydrogen phosphate salt of a metal other than aluminum.

10. A method according to claim 2 characterized in that the solution comprises 40—52 weight % of said mono aluminum phosphate, and 1—15 weight % of magnesium bis(dihydrogen phosphate), the molar percentage of magnesium to total of magnesium and aluminum being 10—20%.

11. A method according to any one of the preceding claims characterized in that the molar percentage of component (iii) phosphoric acid to total of said metal in component (ii) and aluminum in component (i) is 5—50%.

12. A method according to claim 11 characterized in that said molar percentage is 10—25%.

13. A method according to any one of claims 1—10 characterized in that the molar percentage of . component (iii) phosphoric acid to said metal in component (ii) is 0.5—200%.

14. A method according to claim 7 characterized in that component (ii) contains aluminum sulfate.

15. A method according to claim 7 characterized in that components (i) and (ii) contain aluminum and magnesium ions and dihydrogen phosphate and sulfate ions.

16. A method according to claim 14 or 15 characterized in that the molar percentage of sulfate ion to phosphate in components (i), (ii) and (iii) is 0.0001—20%.

17. A method according to claim 16 characterized in that the molar percentage of sulfate ion to phosphate is 5—15%.

## EP 0 236 617 B1

18. A method according to any one of the preceding claims characterized in that the crystallization point of the solution is −26°C to −34.5°C.

19. A method according to claim 1 characterized in that the relative molar percentages of components (i), and (ii) and water (excluding phosphoric acid) are 3—7 moles % component (i), 0.2—1.5 moles % component (ii) and 95—93.9 moles % water.

20. A method according to claim 19 characterized in that component (ii) is mono magnesium bis (dihydrogen phosphate).

21. A two component pack comprising in a first pack an aluminum hydrogen phosphate solution and in a second pack separated therefrom a mixture of a metal oxide curing agent and an aggregate, the first and second packs being such that they form a set cement on intimate mixing, characterized in that the aluminum hydrogen phosphate solution is a solution made by a method according to any one of the preceding claims.

22. A method of producing a set cement, in which an aluminum hydrogen phosphate solution reacts with a metal oxide curing agent, in the presence of an aggregate, characterized in that said solution is made by a method according to any one of claims 1—20.

23. A method according to claim 22 characterized in that the aggregate comprises perlite.

24. A set cement produced by the method of claim 22 or 23 or obtained by mixing the two component pack of claim 21.

### Patentansprüche für die Vertragsstaaten: BE CH LI DE NL SE IT LU

1. Eine wässrige Lösung von Aluminiumphosphat, enthaltend als Bestandteil (I) Monoaluminium-tris-(dihydrogenphosphat), dadurch gekennzeichnet, daß sie enthält als Bestandteil (II) ein Salz eines Metalles, das ein Alkalimetall, ein Erdalkalimetall oder Aluminium oder eine Mischung davon ist, und einer Säure, die mindestens so stark ist wie Phosphorsäure, mit der Bedingung, daß wenn das Metall Aluminium ist, die Säure stärker als Phosphorsäure ist, sowie als Bestandteil (III) Phosphorsäure, wobei das molare Verhältnis der Phosphorsäure (III) (ausgedrückt als Phosphorsäure) zum gesamten Metall im Bestandteil (II) und dem Aluminium in Bestandteil (I) 0,5—100% beträgt, und entweder das Gesamtgewicht der Bestandteile (I), (II) und (III) 30—55% der Lösung beträgt und das molare Verhältnis des Metalls im Bestandteil (II) zur Gesamtmenge des Metalls im Bestandteil (II) und des Aluminiums im Bestandteil (I) 1—65% beträgt, oder die relativen molaren Prozentsätze des Bestandteils (I), des Bestandteils (II) und des Wassers (unter Ausschluß der Phosphorsäure) 2—7 Mol-% für den Bestandteil (i), 0,1—4,5 Mol-% für den Bestandteil (II) und entsprechend 97—93 Mol-% für Wasser betragen.

2. Lösung nach Anspruch 1, dadurch gekennzeichnet, daß sie insgesamt 45—55 Gew.-% der Bestandteile (I), (II) und (III) enthält.

3. Lösung nach Anspruch 1 oder 2, dadurch gekennzeichnet, daß sie 40—52 Gew.-% des Bestandteils (I) und 1—10 Gew.-% des Bestandteils (II) enthält.

4. Lösung nach einem der Ansprüche 1 bis 3, dadurch gekennzeichnet, daß das molare Verhältnis des Metalls in dem Bestandteil (II) zur Gesamtmenge des Metalls in den Bestandteilen (I) und (II) 2—30% beträgt.

5. Lösung nach Anspruch 4, dadurch gekennzeichnet, daß das molare Verhältnis 10—20% beträgt.

6. Lösung nach einem der Ansprüche 1 bis 3, dadurch gekennzeichnet, daß das molare Verhältnis des Metalls im Bestandteil (II) zur Gesamtmenge des Metalls in den Bestandteilen (I) und (II) 20—50% beträgt.

7. Lösung nach einem der vorhergehenden Ansprüche, dadurch gekennzeichnet, daß das Metall im Bestandteil (II) ein Erdalkalimetall oder Aluminium oder eine Mischung davon ist.

8. Lösung nach Anspruch 7, dadurch gekennzeichnet, daß das Metall in dem Bestandteil (II) Magnesium oder Calcium ist.

9. Lösung nach einem der Ansprüche 1 bis 6 und 8, dadurch gekennzeichnet, daß der Bestandteil (II) ein Dihydrogenphosphatsalz eines von Aluminium verschiedenen Metalls ist.

10. Lösung nach Anspruch 2, dadurch gekennzeichnet, daß sie 40—52 Gew.-% des Monoaluminiumphosphats und 1—15 Gew.-% Magnesium-bis-(dihydrogenphosphat) enthält, wobei das molare Verhältnis des Magnesiums zum gesamten Magnesium und Aluminium 10—20% beträgt.

11. Lösung nach einem der vorhergehenden Ansprüche, dadurch gekennzeichnet, daß das molare Verhältnis des Bestandteils (III) Phosphorsäure zum gesamten Metall in dem Bestandteil (II) und Aluminium in dem Bestandteil (I) 5—50% beträgt.

12. Lösung nach Anspruch 11, dadurch gekennzeichnet, daß das molare Verhältnis 10—25% beträgt.

13. Lösung nach einem der Ansprüche 1 bis 10, dadurch gekennzeichnet, daß das molare Verhältnis des Bestandteils (III) Phosphorsäure zu dem Metall in dem Bestandteil (II) 0,5—200% beträgt.

14. Lösung nach Anspruch 7, dadurch gekennzeichnet, daß der Bestandteil (II) Aluminiumsulfat enthält.

15. Lösung nach Anspruch 7, dadurch gekennzeichnet, daß die Bestandteile (I) und (II) Aluminium- und Magnesium-Ionen und Dihydrogenphosphat- und Sulfat-Ionen enthalten.

16. Lösung nach Anspruch 14 oder 15, dadurch gekennzeichnet, daß das molare Verhältnis von Sulfat-Ion zu Phosphat in den Bestandteilen (I), (II) und (III) 0,0001—20% beträgt.

10

17. Lösung nach Anspruch 16, dadurch gekennzeichnet, daß das molare Verhältnis von Sulfat-Ion zu Phosphat 5—15% beträgt.

18. Lösung nach einem der vorhergehenden Ansprüche, dadurch gekennzeichnet, daß ihr Kristallisationspunkt −26°C bis −34,5°C beträgt.

19. Lösung nach Anspruch 1, dadurch gekennzeichnet, daß die relativen molaren Prozentsätze der Bestandteile (I) und (II) und Wasser (unter Ausschluß von Phosphorsäure) 3—7 Mol-% für den Bestandteil (I), 0,2—1,5 Mol-% für den Bestandteil (II) und 95—93,9 Mol-% für Wasser betragen.

20. Lösung nach Anspruch 19, dadurch gekennzeichnet, daß der Bestandteil (II) Monomagnesium-bis-(dihydrogenphosphat) ist.

21. Ein Zweikomponenten-System bestehand aus in einem Teil einer Aluminiumhydrogenphosphatlösung und in einem zweiten davon getrennten Teil einer Mischung eines Metalloxid-Härters und einem Zuschlagsstoff, wobei die beiden Teile des Systems so gestaltet sind, daß sie bei sorgfältiger Mischung einen Bindezement bilden, dadurch gekennzeichnet, daß die Aluminiumhydrogenphosphatlösung eine Lösung nach einem der vorhergehenden Ansprüche ist.

22. Verfahren zur Herstellung eines Bindezements, wobei eine Aluminiumhydrogenphosphatlösung mit einem Metalloxid-Härter in Anwesenheit eines Zuschlagsstoffes reagiert, dadurch gekennzeichnet, daß die Lösung eine Lösung nach einem der Ansprüche 1 bis 20 ist.

23. Verfahren nach Anspruch 22, dadurch gekennzeichnet, daß der Zuschlagsstoff Perlit umfaßt.

24. Bindezement, hergestellt nach dem Verfahren nach Anspruch 22 oder 23, oder erhalten durch Vermischen der beiden Teilkomponenten nach Anspruch 21.

**Patentansprüche für den Vertragsstaat: AT**

1. Verfahren zur Erniedrigung des Kristallisations- und Gefrierpunkts einer wässrigen Lösung von Aluminiumphosphat, enthaltend als Bestandteil (I) Monoaluminium-tris-(dihydrogenphosphat), und gekennzeichnet durch die Anwesenheit in der Lösung des Bestandteils (II), einem Salz eines Metalles, das ein Alkalimetall, ein Erdalkalimetall oder Aluminium oder eine Mischung davon ist, und einer Säure, die mindestens so stark ist wie Phosphorsäure, mit der Bedingung, daß wenn das Metall Aluminium ist, die Säure stärker als Phosphorsäure ist, sowie des Bestandteils (III), Phosphorsäure, wobei das molare Verhältnis der Phosphorsäure (III) (ausgedrückt als Phosphorsäure) zum gesamten Metall im Bestandteil (II) und dem Aluminium in Bestandteil (I) 0,5—100% beträgt, und entweder das Gesamtgewicht der Bestandteile (I), (II) und (III) 30—55% der Lösung beträgt und das molare Verhältnis des Metalls im Bestandteil (II) zur Gesamtmenge des Metalls im Bestandteil (II) und des Aluminiums im Bestandteil (I) 1—65% beträgt, oder die relativen molaren Prozentsätze des Bestandteils (I), des Bestandteils (II) und des Wassers (unter Ausschluß der Phosphorsäure) 2—7 Mol-% für den Bestandteil (i), 0,1—4,5 Mol-% für den Bestandteil (II) und entsprechend 97—93 Mol-% für Wasser betragen.

2. Verfahren nach Anspruch 1, dadurch gekennzeichnet, daß die Lösung insgesamt 45—55 Gew.-% der Bestandteile (I), (II) und (III) enthält.

3. Verfahren nach Anspruch 1 oder 2, dadurch gekennzeichnet, daß die Lösung 40—52 Gew.-% des Bestandteils (I) und 1—10 Gew.-% des Bestandteils (II) enthält.

4. Verfahren nach einem der Ansprüche 1 bis 3, dadurch gekennzeichnet, daß das molare Verhältnis des Metalls in dem Bestandteil (II) zur Gesamtmenge des Metalls in den Bestandteilen (I) und (II) 2—30% beträgt.

5. Verfahren nach Anspruch 4, dadurch gekennzeichnet, daß das molare Verhältnis 10—20% beträgt.

6. Verfahren nach einem der Ansprüche 1 bis 3, dadurch gekennzeichnet, daß das molare Verhältnis des Metalls im Bestandteil (II) zur Gesamtmenge des Metalls in den Bestandteilen (I) und (II) 20—50% beträgt.

7. Verfahren nach einem der vorhergehenden Ansprüche, dadurch gekennzeichnet, daß das Metall im Bestandteil (II) ein Erdalkalimetall oder Aluminium oder eine Mischung davon ist.

8. Verfahren nach Anspruch 7, dadurch gekennzeichnet, daß das Metall in dem Bestandteil (II) Magnesium oder Calcium ist.

9. Verfahren nach einem der Ansprüche 1 bis 6 und 8, dadurch gekennzeichnet, daß der Bestandteil (II) ein Dihydrogenphosphatsalz eines von Aluminium verschiedenen Metalls ist.

10. Verfahren nach Anspruch 2, dadurch gekennzeichnet, daß die Lösung 40—52 Gew.-% des Monoaluminiumphosphats und 1—15 Gew.-% Magnesium-bis-(dihydrogenphosphat) enthält, wobei das molare Verhältnis des Magnesiums zum gesamten Magnesium und Aluminium 10—20% beträgt.

11. Verfahren nach einem der vorhergehenden Ansprüche, dadurch gekennzeichnet, daß das molare Verhältnis des Bestandteils (III) Phosphorsäure zum gesamten Metall in dem Bestandteil (II) und Aluminium in dem Bestandteil (I) 5—50% beträgt.

12. Verfahren nach Anspruch 11, dadurch gekennzeichnet, daß das molare Verhältnis 10—25% beträgt.

13. Verfahren nach einem der Ansprüche 1 bis 10, dadurch gekennzeichnet, daß das molare Verhältnis des Bestandteils (III) Phosphorsäure zu dem Metall in dem Bestandteil (II) 0,5—200% beträgt.

14. Verfahren nach Anspruch 7, dadurch gekennzeichnet, daß der Bestandteil (II) Aluminiumsulfat enthält.

15. Verfahren nach Anspruch 7, dadurch gekennzeichnet, daß die Bestandteile (I) und (II) Aluminium-

und Magnesium-Ionen und Dihydrogenphosphat- und Sulfat-Ionen enthalten.

16. Verfahren nach Anspruch 14 oder 15, dadurch gekennzeichnet, daß das molare Verhältnis von Sulfat-Ion zu Phosphat in den Bestandteilen (I), (II) und (III) 0,0001—20% beträgt.

17. Verfahren nach Anspruch 16, dadurch gekennzeichnet, daß das molare Verhältnis von Sulfat-Ion zu Phosphat 5—15% beträgt.

18. Verfahren nach einem der vorhergehenden Ansprüche, dadurch gekennzeichnet, daß der Kristallisationspunkt der Lösung −26°C bis −34,5°C beträgt.

19. Verfahren nach Anspruch 1, dadurch gekennzeichnet, daß die relativen molaren Prozentsätze der Bestandteile (I) und (II) und Wasser (unter Ausschluß von Phosphorsäure) 3—7 Mol-% für den Bestandteil (I), 0,2—1,5 Mol-% für den Bestandteil (II) und 95—93,9 Mol-% für Wasser betragen.

20. Verfahren nach Anspruch 19, dadurch gekennzeichnet, daß der Bestandteil (II) Monomagnesium-bis-(dihydrogenphosphat) ist.

21. Ein Zweikomponenten-System bestehand aus in einem Teil einer Aluminiumhydrogenphosphatlösung und in einem zweiten davon getrennten Teil einer Mischung eines Metalloxid-Härters und einem Zuschlagsstoff, wobei die beiden Teile des Systems so gestaltet sind, daß sie bei sorgfältiger Mischung einen Bindezement bilden, dadurch gekennzeichnet, daß die Aluminiumhydrogenphosphatlösung eine Lösung hergestellt nach einem der vorhergehenden Ansprüche ist.

22. Verfahren zur Herstellung eines Bindezements, wobei eine Aluminiumhydrogenphosphatlösung mit einem Metalloxid-Härter in Anwesenheit eines Zuschlagsstoffes reagiert, dadurch gekennzeichnet, daß die Lösung nach einem Verfahren nach einem der Ansprüche 1 bis 20 hergestellt wurde.

23. Verfahren nach Anspruch 22, dadurch gekennzeichnet, daß der Zuschlagsstoff Perlit umfaßt.

24. Bindezement, hergestellt nach dem Verfahren nach Anspruch 22 oder 23, oder erhalten durch Vermischen der beiden Teilkomponenten nach Anspruch 21.

**Revendications pour les Etats contractants: BE CH LI DE FR NL SE IT LU**

1. Solution aqueuse de phosphate d'aluminium, comprenant un constituant (i) qui est du tris-(dihydrogéno phosphate) de monoaluminium, caractérisé en ce qu'elle comprend comme constituant (ii) un sel de métal, qui est un métal alcalin, un métal alcalino-terreux ou l'aluminium ou un de leurs mélanges et un acide au moins aussi fort que l'acide phosphorique, à la condition que si ledit métal consiste en l'aluminium, ledit acide est plus fort que l'acide phosphorique, et comme constituant (iii) l'acide phosphorique, le pourcentage molaire de l'acide phosphorique (iii) (exprimé en acide phosphorique) par rapport au total dudit métal dans le constituant (ii) et l'aluminium dans le constituant (i) étant de 0,5 à 100%, et soit la proportion pondérale totale des constituants (i), (ii) et (iii) est de 30 à 55% de ladite solution et le pourcentage molaire dudit métal du constituant (ii) par rapport au total dudit métal dans le constituant (ii) et de l'aluminium dans le constituant (i) est de 1 à 65%, soit les pourcentages molaires relatifs du constituant (i), du constituant (ii) et de l'eau (à l'exclusion de l'acide phosphorique) sont de 2 à 7 moles % du constituant (i), 0,1 à 4,5 moles % du constituant (ii) et, de manière correspondante, 97 à 93 moles % d'eau.

2. Solution selon la revendication 1, caractérisée en ce qu'elle contient un total de 45 à 55% en poids des constituants (i), (ii) et (iii).

3. Solution selon la revendication 1 ou 2, caractérisée en ce qu'elle contient 40 à 52% en poids du constituant (i) et 1 à 10% en poids du constituant (ii).

4. Solution selon l'une quelconque des revendications 1 à 3, caractérisée en ce que le pourcentage molaire de métal dans le constituant (ii) par rapport à la quantité totale de métal dans les constituants (i) et (ii) est de 2 à 30%.

5. Solution selon la revendication 4, caractérisée en ce que ledit pourcentage molaire est de 10 à 20%.

6. Solution selon l'une quelconque des revendications 1 à 3, caractérisée en ce que le pourcentage molaire de métal dans le constituant (ii), par rapport à la quantité totale de métal dans les constituants (i) et (ii), est de 20 à 50%.

7. Solution selon l'une quelconque des revendications précédentes, caractérisée en ce que ledit métal dans le constituant (ii) est un métal alcalino-terreux ou l'aluminium ou un de leurs mélanges.

8. Solution selon la revendication 7, caractérisée en ce que ledit métal du constituant (ii) est le magnésium ou le calcium.

9. Solution selon l'une quelconque des revendications 1 à 6 et 8, caractérisée en ce que le constituant (ii) est un sel de type dihydrogéno phosphate d'un métal autre que l'aluminium.

10. Solution selon la revendication 2, caractérisée en ce qu'elle comprend 40 à 52% en poids dudit phosphate de mono aluminium et de 1 à 15% en poids de bis(dihydrogénophosphate) de magnésium, le pourcentage molaire du magnésium par rapport au total du magnésium et de l'aluminium étant de 10 à 20%.

11. Solution selon l'une quelconque des revendications précédentes, caractérisée en ce que le pourcentage molaire du constituant (iii), l'acide phosphorique, par rapport au total dudit métal dans le constituant (ii) et de l'aluminium dans le constituant (i) est de 5 à 50%.

12. Solution selon la revendication 11, caractérisée en ce que ledit pourcentage molaire est de 10 à 25%.

13. Solution selon l'une quelconque des revendications 1 à 10, caractérisée en ce que le pourcentage molaire du constituant (iii), l'acide phosphorique, par rapport audit métal dans le constituant (ii) est de 0,5 à 200%.

14. Solution selon la revendication 7, caractérisée en ce que le constituant (ii) contient du sulfate d'aluminium.

15. Solution selon la revendication 7, caractérisée en ce que les constituants (i) et (ii) contiennent des ions aluminium et magnésium et des ions dihydrogéno phosphate et sulfate.

16. Solution selon la revendication 14 ou 15, caractérisée en ce que le pourcentage molaire de l'ion sulfate au phosphate dans les constituants (i), (ii) et (iii), est de 0,0001 à 20%.

17. Solution selon la revendication 16, caractérisée en ce que le pourcentage molaire de l'ion sulfate par rapport au phosphate est de 5 à 15%.

18. Solution selon l'une quelconque des revendications précédentes, caractérisée en ce que son point de cristallisation est de −26°C à −34,5°C.

19. Solution selon la revendication 1, caractérisée en ce que les pourcentages molaires relatifs des constituants (i) et (ii) et de l'eau (à l'exclusion de l'acide phosphorique) sont de 3 à 7 moles % du constituant (i), 0,2 à 1,5 moles % du constituant (ii) et 95 à 93,9 moles % d'eau.

20. Solution selon la revendication 19, caractérisée en ce que le constituant (ii) est du bis(dihydrogéno phosphate) de mono magnésium.

21. Emballage en deux parties, comprenant dans un premier emballage une solution d'hydrogéno phosphate d'aluminium et, dans un second emballage séparé du premier, un mélange d'un agent de durcissement de type oxyde de métal et d'un agrégat, les premier et second emballages étant tels qu'ils forment un ciment durci lorsqu'on les mélange intimément, produit caractérisé en ce que la solution d'hydrogéno phosphate d'aluminium est une solution selon l'une quelconque des revendications précédentes.

22. Procédé pour produire un ciment durci, dans lequel une solution d'hydrogéno phosphate d'aluminium réagit avec un agent de durcissement de type oxyde de métal, en présence d'un agrégat, procédé caractérisé en ce que ladite solution est selon l'une quelconque des revendications 1 à 20.

23. Procédé selon la revendication 22, caractérisé en ce que l'agrégat comprend de la perlite.

24. Ciment durci produit par le procédé de la revendication 22 ou 23, ou obtenu par mélange des produits de l'emballage en deux parties de la revendication 21.

## Revendications pour l'Etat contractant: AT

1. Procédé pour abaisser le point de cristallisation et de congélation d'une solution aqueuse de phosphate d'aluminium, comprenant un constituant (i) qui est du tris(dihydrogéno phosphate) de mono aluminium, et caractérisé par la présence, dans la solution, comme constituant (ii), d'un sel de métal, qui est un métal alcalin, un métal alcalino-terreux ou l'aluminium ou un de leurs mélanges et d'un acide au moins aussi fort que l'acide phosphorique, à la condition que si ledit métal consiste en aluminium, ledit acide est plus fort que l'acide phosphorique, et comme constituant (iii), d'acide phosphorique, le pourcentage molaire de l'acide phosphorique (iii) (exprimé en acide phosphorique) par rapport au total dudit métal dans le constituant (ii) et de l'aluminium dans le constituant (i) étant de 0,5 à 100%, et soit la proportion pondérale totale des constituants (i), (ii) et (iii) est de 30 à 55% de la solution totale et le pourcentage molaire dudit métal du constituant (ii) par rapport au total dudit métal dans le constituant (ii) et de l'aluminium dans le constituant (i) est de 1 à 65%, soit les pourcentages molaires relatifs du constituant (i), du constituant (ii) et de l'eau (à l'exclusion de l'acide phosphorique) sont de 2 à 7 moles % du constituant (i), 0,1 à 4,5 moles % du constituant (ii) et, de manière correspondante, de 97 à 93 moles % d'eau.

2. Procédé selon la revendication 1, caractérisé en ce que la solution contient un total de 45 à 55% en poids des constituants (i), (ii) et (iii).

3. Procédé selon la revendication 1 ou 2, caractérisé en ce la solution contient 40 à 52% en poids du constituant (i) et 1 à 10% en poids du constituant (ii).

4. Procédé selon l'une quelconque des revendications 1 à 3, caractérisé en ce que le pourcentage molaire de métal dans le constituant (ii), par rapport à la quantité totale de métal dans les constituants (i) et (ii), est de 2 à 30%.

5. Procédé selon la revendication 4, caractérisé en ce que ledit pourcentage molaire est de 10 à 20%.

6. Procédé selon l'une quelconque des revendications 1 à 3, caractérisé en ce que le pourcentage molaire de métal dans le constituant (ii), par rapport à la quantité totale de métal dans les constituants (i) et (ii), est de 20 à 50%.

7. Procédé selon l'une quelconque des revendications précédentes, caractérisé en ce que ledit métal dans le constituant (ii) est un métal alcalino-terreux ou l'aluminium ou un de leurs mélanges.

8. Procédé selon la revendication 7, caractérisé en ce que ledit métal du constituant (ii) est le magnésium ou le calcium.

9. Procédé selon l'une quelconque des revendications 1 à 6 et 8, caractérisé en ce que le constituant (ii) est un sel de type dihydrogéno phosphate d'un métal autre que l'aluminium.

10. Procédé selon la revendication 2, caractérisé en ce que la solution comprend 40 à 52% en poids

13

EP 0 236 617 B1

dudit phosphate de mono aluminium et de 1 à 15% en poids de bis(dihydrogénophosphate) de magnésium, le pourcentage molaire du magnésium par rapport au total du magnésium et de l'aluminium étant de 10 à 20%.

11. Procédé selon l'une quelconque des revendications précédentes, caractérisé en ce que le pourcentage molaire du constituant (iii), l'acide phosphorique, par rapport au total dudit métal dans le constituant (ii) et de l'aluminium dans le constituant (i) est de 5 à 50%.

12. Procédé selon la revendication 11, caractérisé en ce que ledit pourcentage molaire est de 10 à 25%.

13. Procédé selon l'une quelconque des revendications 1 à 10, caractérisé en ce que le pourcentage molaire du constituant (iii), l'acide phosphorique, par rapport audit métal dans le constituant (ii) est de 0,5 à 200%.

14. Procédé selon la revendication 7, caractérisé en ce que le constituant (ii) contient du sulfate d'aluminium.

15. Procédé selon la revendication 7, caractérisé en ce que les constituants (i) et (ii) contiennent des ions aluminium et magnésium et des ions dihydrogéno phosphate et sulfate.

16. Procédé selon la revendication 14 ou 15, caractérisé en ce que le pourcentage molaire de l'ion sulfate par rapport au phosphate dans les constituants (i), (ii) et (iii) est de 0,0001 à 20%.

17. Procédé selon la revendication 16, caractérisé en ce que le pourcentage molaire de l'ion sulfate par rapport au phosphate est de 5 à 15%.

18. Procédé selon l'une quelconque des revendications précédentes, caractérisé en ce que le point de cristallisation de la solution est de −26°C à −34,5°C.

19. Procédé selon la revendication 1, caractérisé en ce que les pourcentages molaires relatifs des constituants (i) et (ii) et de l'eau (à l'exclusion de l'acide phosphorique) sont de 3 à 7 moles % du constituant (i), de 0,2 à 1,5 moles % du constituant (ii) et de 95 à 93,9 moles % d'eau.

20. Procédé selon la revendication 19, caractérisé en ce que le constituant (ii) est du bis(dihydrogéno phosphate) de mono magnésium.

21. Emballage en deux parties, comprenant dans un premier emballage une solution d'hydrogéno phosphate d'aluminium et, dans un second emballage séparé du premier, un mélange d'un agent de durcissement de type oxyde de métal et d'un agrégat, les premier et second emballages étant tels qu'ils forment un ciment durci lorsqu'on les mélange intimément, produit caractérisé en ce que la solution d'hydrogéno phosphate d'aluminium est une solution obtenue par un procédé selon l'une quelconque des revendications précédentes.

22. Procédé pour produire un ciment durci, dans lequel une solution d'hydrogéno phosphate d'aluminium réagit avec un agent de durcissement de type oxyde de métal, en présence d'un agrégat, procédé caractérisé en ce que ladite solution est obtenue par un procédé selon l'une quelconque des revendications 1 à 20.

23. Procédé selon la revendication 22, caractérisé en ce que l'agrégat comprend de la perlite.

24. Ciment durci produit par le procédé de la revendication 22 ou 23, ou obtenu par mélange des produits de l'emballage en deux parties de la revendication 21.

14